# EUROPÄISCHE PATENTSCHRIFT

(11) **EP 1 137 687 B1**
(45) Veröffentlichungstag und Bekanntmachung des Hinweises auf die Patenterteilung: **17.12.2003**
(21) Anmeldenummer: 99948876.0
(22) Anmeldetag: 27.09.1999
(51) Int. Cl.: C08G 18/40, C09D 175/04

(54) **BESCHICHTUNGSMITTEL, VERFAHREN ZU SEINER HERSTELLUNG UND SEINE VERWENDUNG ALS DECKLACK ODER KLARLACK, INSBESONDERE ZUR BESCHICHTUNG VON KUNSTSTOFFEN**
COATING AGENT, METHOD FOR PRODUCING SAID COATING AGENT AND USE OF THE SAME AS A COATING LACQUER OR A CLEAR LACQUER, ESPECIALLY FOR COATING PLASTICS
MATERIAU DE REVETEMENT, SON PROCEDE DE FABRICATION ET SON UTILISATION COMME VERNIS DE FINITION OU VERNIS CLAIR, NOTAMMENT POUR REVETIR DES PLASTIQUES

(30) Priorität: 12.10.1998 DE 19846971
(43) Veröffentlichungstag der Anmeldung: 04.10.2001
(73) Patentinhaber: BASF Coatings AG, 48165 Münster (DE)
(72) Erfinder: WILKE, Guido, D-48151 Münster (DE)
(74) Vertreter: Fitzner, Ulrich, Dr.
(86) Internationale Anmeldenummer: EP9907163
(87) Internationale Veröffentlichungsnummer: WO00022020

(56) Entgegenhaltungen:
- EP-A- 0 653 468
- WO-A-92/02590
- WO-A-96/34924
- WO-A-98/02495
- DE-C- 19 723 504

## Beschreibung

Gegenstand der vorliegenden Erfindung ist ein Polyurethan-Beschichtungsmittel, enthaltend
a) ein oder mehrere Polyesterharze (A),
b) ein oder mehrere Polyacrylatharze (B),
c) ein oder mehrere Di- und/oder Polyisocyanate (C) mit freien oder blockierten Isocyanatgruppen,
d) ein oder mehrere Lichtschutzmittel (L1) auf Basis eines UV-Absorbers,
e) ein oder mehrere Lichtschutzmittel (L2) auf der Basis sterisch gehinderter Amine und
f) ein oder mehrere organische Lösemittel (D).

Die vorliegende Erfindung betrifft außerdem Verfahren zur Herstellung des Beschichtungsmittels sowie die Verwendung des Beschichtungsmittels als Deck- oder Klarlack, insbesondere zur Beschichtung von Kunststoffen.

In der Industrie werden heute zunehmend Formteile auf Kunststoffbasis verwendet, die zusammen mit Metallteilen eingesetzt werden und die einer Lackierung bedürfen. Dies gilt insbesondere für Kraftfahrzeugteile, die in zunehmendem Maße aus Kunststoffteilen gefertigt werden, wie beispielsweise Stoßfängerverkleidungen, Spoiler, Schweller, Radhausverkleidungen und seitliche Verkleidungen bzw. Schutzleisten. Für derartige Formteile werden in zunehmendem Maße Kunststoffe aus Polycarbonat und Polycarbonat-Blends, bevorzugt mit einem Polycarbonatgehalt von mehr als 5 Gew.-%, bezogen auf den Kunststoffanteil, eingesetzt.

Kunststoffe sind jedoch im allgemeinen gegenüber Witterungseinflüssen, wie UV-Strahlung und Feuchtigkeit, empfindlich und zeigen bei entsprechender Belastung vielerlei Probleme, wie z.B. Vergilbung, Versprödung oder Rißbildung, wenn nicht entsprechende Vorsorgemaßnahmen getroffen werden. Zur Vermeidung dieser Probleme ist es beispielsweise bekannt, Kunststoffe, die aufgrund ihrer Verwendung beispielsweise als Automobilaußenteile Witterungseinflüssen ausgesetzt sind, mit Klarlacken oder Decklacken zu versehen. Den für diesen Zweck eingesetzten Lacken werden üblicherweise Lichtschutzmittel zugesetzt, um die durch die UV-Strahlung verursachten Probleme zu vermeiden oder zumindest zu reduzieren.

Die an derartige Lichtschutzmittel zu stellenden Forderungen sind vielfältig. So sollen diese Additive den Lack in den mechanischen und chemischen Eigenschaften nicht negativ beeinflußen. Ferner sollen diese Additive chemisch und gegenüber UV-Strahlung stabil sein sowie außerdem hell, farbtonbeständig und leicht einarbeitbar und mit den anderen Bestandteilen des Lackes verträglich sein. Es ist nun bereits eine Vielzahl unterschiedlicher Lichtschutzmittel und ihre Verwendung in Lacken bekannt.

So werden beispielsweise verschiedene Benzophenon-Derivate, Benzotriazol-Derivate, Triazine, Acrylate, Salicylate, Oxazoline, organische Nickelverbindungen, Ferrocen-Derivate, sterisch gehinderte Amine u.ä. einzeln oder in Kombination als Lichtschutzmittel eingesetzt.

Trotz der Vielzahl bekannter Lichtschutzmittel und bekannter Klarlacksysteme bestehen immer noch große Probleme bei der Beschichtung von eingefärbten, thermoplastischen Kunststoffen, wie sie insbesondere für großflächige Automobilaußenteile verwendet werden. Neben der bereits genannten Witterungsbeständigkeit müssen die eingesetzten Lacke nämlich gleichzeitig eine gute Haftung auf den Kunststoffsubstraten aufweisen und zu einem hydrolysebeständigen Verbund (d.h. gute Haftung nach Feuchteeinwirkung) mit guter Chemikalienresistenz und guter Festigkeit bei Raumtemperatur führen, der auch bei niedrigen Temperaturen von -20 bis -30 °C ein duktiles Bruchverhalten zeigt. Im Bereich der Kunststofflackierung besteht außerdem noch die Forderung, daß die eingesetzten Beschichtungsmittel bei niedrigen Temperaturen (im allgemeinen < 100°C) aushärtbar sind und auch bei Aushärtung bei diesen niedrigen Temperaturen zu Filmen mit den gewünschten Eigenschaften führen.

Aus der DE-A-43 26 670 ist ein Polyurethan-Beschichtungsmittel auf der Basis eines Hydroxybutyl(meth)acrylat enthaltenden Polyacrylatharzes und ggf. weiterer Polyacrylat- und/oder Polykondensationsharze und Polyisocyanaten als Vernetzer sowie dessen Verwendung als Klarlack im Bereich der Autoreparaturlackierung und zur Beschichtung von Kunststoffen bekannt. Als Lichtschutzmittel enthält der Klarlack eine Mischung aus Benztriazin als UV-Absorber und einem Lichtschutzmittel auf Basis sterisch gehinderter Amine (Tinuvin® 292 der Firma Ciba Geigy, Lichtschutzmittel auf Basis Bis(1,2,2,6,6-pentamethyl-4-piperidyl)sebacat).

Aus der EP-B-0 455 211 ist schließlich ein Effekt-Basislack zur direkten Beschichtung von aus Polypropylen bestehenden oder Polypropylen enthaltenden, nichtgrundierten Kunststoffsubstraten bekannt. Dieser dort beschriebene Effekt-Basislack enthält neben physikalisch trocknenden Bindemitteln Celluloseacetobutyrat und 0,5 bis 15 Gew.-% eines oder mehrerer chlorierter Polyolefine. Klarlacke und Decklacke sind jedoch in der EP-B-0 455 211 nicht beschrieben.

Aus der US-A-5,145,839 sind Beschichtungsmittel bekannt, welche Gemische aus den Lichtschutzmitteln (L1) und (L2) in einer Menge von 0, 2 bis 20 Gew.-%, bezogen auf die filmbildenden Harze, enthalten. Die Mengen des Lichtschutzmittels (L1) sind nicht näher spezifiziert, es läßt sich lediglich den Beispielen entnehmen, daß weniger als 2 Gew.-%, bezogen auf das gesamte Beschichtungsmittel, angewandt werden. Außerdem wird nicht angegeben, welche speziellen Bindemittel-Kombinationen verwendet werden sollen. Die Beschichtungsmittel können der Beschichtung von Kunststoffen dienen.

In der US-A-5,504,178 oder der DE-A-31 09 604 werden Beschichtungsmittel beschrieben, welche Polyesterharze (A) und Polyacrylatharze (B) als Bindemittel, Polyisocyanate als Vernetzer und Lichtschutzmittel (L1) enthalten. Lichtschutzmittel (L2) sind hierin nicht enthalten. Auch diese Beschichtungsmittel können der Beschichtung von Kunststoffen dienen.

Aus der EP-A-0 518 779 geht ein Beschichtungsmittel für die Beschichtung von Kunststoffen hervor, welches ein Polyesterpolyol (A) und/oder ein Polyetherpolyol als Bindemittel, Triisocyanate als Vernetzer und eine Kombination von sterisch gehinderte Aminen (HALS) und Lichtschutzmitteln (L1) enthält.

Indes läßt die Farbtonstabilität nach Strahlungsbelastung der Beschichtungen, welche aus diesen bekannten Beschichtungsmitteln hergestellt wurden, noch zu wünschen übrig, wobei erschwerend hinzukommt, daß sich durch die Strahlungsbelastung Risse in den Beschichtungen bilden.

Der vorliegenden Erfindung liegt somit die Aufgabe zugrunde, Beschichtungsmittel zur Verfügung zu stellen, die neben einer guten Witterungsbeständigkeit der resultierenden Beschichtungen gleichzeitig eine gute Haftung auf den Kunststoffsubstraten aufweisen und die zu einem hydrolysebeständigen Verbund (d.h. gute Haftung nach Feuchteeinwirkung) mit guter Chemikalienrestistenz und guter Festigkeit bei Raumtemperatur führen, wobei der Verbund auch bei niedrigen Temperaturen von -20 bis -30 °C ein duktiles Bruchverhalten zeigt. Außerdem sollen die neuen Beschichtungsmittel als Klarlack eine deutlich höhere Farbtonstabilität nach Strahlungsbelastung in den gefärbten Kunststoffteilen oder den Basislacken bewirken und für sich selbst gesehen und weniger rissanfällig sein als die herkömmlichen Beschichtungsmittel.

Diese Aufgabe wird überraschenderweise durch ein Beschichtungsmittel der eingangs genannten Art gelöst, das dadurch gekennzeichnet ist, daß
1.) der Polyester (A) eine OH-Zahl von 80 bis 200 mg KOH/g und eine Säurezahl < 10 mgKOH/g aufweist,
2.) das Polyacrylatharz (B) eine OH-Zahl von 80 bis 200 mgKOH/g und eine Säurezahl < 20 mgKOH/g aufweist,
3.) das Lichtschutzmittel (L2) auf Basis sterisch gehinderter Amine aminoetherfunktionalisiert ist und
4.) das Lichtschutzmittel (L1) hierin in einer Menge von mindestens 3 Gew.-%, bezogen auf das Beschichtungsmittel, enthalten ist.

Gegenstand der vorliegenden Erfindung sind außerdem Verfahren zur Herstellung dieses Beschichtungsmittels sowie die Verwendung dieses Beschichtungsmittels als Decklack oder Klarlack, insbesondere zur Beschichtung von Kunststoffen.

Es ist überraschend und war nicht vorhersehbar, daß durch die Verwendung einer speziellen Bindemittelkombination und gleichzeitig einer speziellen Lichtschutzmittelkombination Beschichtungsmittel zur Verfügung gestellt werden können, die als Schutzlackierung für farbig pigmentierte Kunststoffe geeignet sind und alle an derartige Beschichtungsmittel üblicherweise gestellten Anforderungen erfüllen. So zeichnen sich die unter Verwendung dieser Beschichtungsmittel hergestellten Überzüge durch eine gute Witterungsbeständigkeit bei gleichzeitig guter Haftung auf den Kunststoffsubstraten aus. Ferner führen sie zu einem hydrolysebeständigen Verbund (d.h. gute Haftung nach Feuchteeinwirkung) mit guter Chemikalienrestistenz und guter Festigkeit bei Raumtemperatur, der auch bei niedrigen Temperaturen von -20 bis -30 °C ein duktiles Bruchverhalten zeigt.

Im folgenden werden nun zunächst die einzelnen Bestandteile des erfindungsgemäßen Beschichtungsmittels näher erläutert.

Es ist erfndungwesentlich, daß das Beschichtungsmittel als Bindemittel eine Mischung aus
a) mindestens einem Polyester (A) mit einer OH-Zahl von 80 bis 200 mg KOH/g, bevorzugt 130 bis 180 mgKOH/g, und mit einer Säurezahl < 10 mgKOH/g, bevorzugt < 5 mgKOH/g, und
b) mindestens einem Polyacrylatharz (B) mit einer OH-Zahl von 80 bis 200 mgKOH/g, bevorzugt von 100 bis 150 mgKOH/g, und einer Säurezahl < 20 mgKOH/g, bevorzugt < 10 mgKOH/g, enthält.

Bevorzugt enthält das Beschichtungsmittel den oder die Polyester (Komponente (A)) und das oder die Polyacrylatharze (Komponente (B)) in solchen Mengen, daß die Mischung aus
a) 40 bis 80 Gew.-%, bevorzugt 55 bis 70 Gew.-%, der Komponente (A) und
b) 60 bis 20 Gew.-%, bevorzugt 45 bis 30 Gew.-%, der Komponente (B) besteht,
wobei die Angaben jeweils bezogen sind auf den Festkörper der Harze und wobei die Summe der Gew.%-Angaben der Komponenten (A) und (B) jeweils 100 Gew.-% beträgt.

Bevorzugt werden die Bindemittel außerdem in dem erfindungsgemäßen Beschichtungsmittel in solchen Mengen eingesetzt, daß die Summe aus der Menge an eingesetzten Polyestern (A) und der Menge an eingesetzten Polyacrylatharzen (B) 30 bis 70 Gew.-%, besonders bevorzugt 40 bis 60 Gew.-%, jeweils bezogen auf den Festkörpergehalt der Bindemittel und auf das Gesamtgewicht des Stammlacks (d.h. Beschichtungsmittel ohne Vernetzer-Komponente (C)), beträgt.

Für den Einsatz in den erfindungsgemäßen Beschichtungsmitteln sind prinzipiell alle Polyester mit den obengenannten OH-Zahlen und Säurezahlen geeignet. Bevorzugt weisen die Polyester (A) ein zahlenmittleres Molekulargewicht von 700 bis 1.500 auf.

Bevorzugt werden Polyester eingesetzt, die erhältlich sind durch Umsetzung von
p1) Di- und/oder Polycarbonsäuren oder deren veresterungsfähigen Derivaten, gegebenenfalls zusammen mit Monocarbonsäuren,
p2) Diolen,
p3) Polyolen, gegebenenfalls zusammen mit Monoolen, und
p4) gegebenenfalls weiteren modifizierenden Komponenten.

Besonders bevorzugt werden dabei Polyester eingesetzt, die ohne Verwendung von Monoolen und Monocarbonsäuren hergestellt worden sind. Ebenfalls besonders bevorzugt sind die Polyester frei von ungesättigten Fettsäuren.

Als Beispiele für Di- und Polycarbonsäuren, die als Komponente (p1) eingesetzt werden können, seien aromatische, aliphatische und cycloaliphatische Di- und Polycarbonsäuren genannt. Bevorzugt werden als Komponente (p1) aromatische, ggf. zusammen mit aliphatischen, Di- und Polycarbonsäuren eingesetzt.

Beispiele für geeignete Polycarbonsäuren sind Phthalsäure, Isophthalsäure, Terephthalsäure, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure, Cyclobutantetracarbonsäure und andere. Die cycloaliphatischen Polycarbonsäuren können sowohl in ihrer cis- als auch in ihrer trans-Form sowie als Gemisch beider Formen eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Beispiele für Monocarbonsäuren, die gegebenenfalls zusammen mit den Polycarbonsäuren eingesetzt werden können, sind Benzoesäure, tert.-Butylbenzoesäure, Laurinsäure, Isononansäure und hydrierte Fettsäuren natürlich vorkommender Öle, bevorzugt Isononansäure.

Geeignete Diole (p2) zur Herstellung des Polyesters (A) sind beispielsweise Ethylenglykol, Propandiole, Butandiole, Hexandiole, Hydroxypivalinsäureneopentylglykolester, Neopentylglykol, Diethylenglykol, Cyclohexandiol, Cyclohexandimethanol, Trimethylpentandiol und Ethylbutylpropandiol. Ferner sind auch aliphatische Polyetherdiole, wie lineare oder verzweigte Poly(oxiethylen)glykole, Poly(oxipropylen)glykole und/oder Poly(oxybutylen)glykole und gemischte Polyetherdiole wie Poly(oxyethylenoxypropylen)glykole geeignet. Die Polyetherdiole haben üblicherweise eine Molmasse Mn von 400 bis 3000.

Ferner können als Diole auch aromatische oder alkylaromatische Diole eingesetzt werden, wie z. B. 2-Alkyl-2-phenyl-propan-1,3-diol, Bisphenol-Derivate mit Etherfunktionalität usw..

Als weitere Diole sind auch Ester von Hydroxycarbonsäuren mit Diolen geeignet, wobei als Diol die voranstehend genannten Diole eingesetzt werden können. Beispiele für Hydroxycarbonsäuren sind Hydroxypivalinsäure oder Dimethylolpropansäure.

Beispiele für als Komponente (p3) geeignete Polyole sind Ditrimethylolpropan, Trimethylolethan, Trimethylolpropan, Glycerin, Pentaerythrit, Homopentaerythrit, Dipentaerythrit, Trishydroxiethylisocyanat, 1,2,4 Butantriol, Propan- und Hexan-Triole, Trihydroxycarbonsäuren wie Trishydroxymethyl(ethyl)ethansäuren. Die Polyole mit mindestens 3 OH-Gruppen können allein oder als Gemisch eingesetzt werden. Gegebenenfalls können die Triole zusammen mit einwertigen Alkoholen, wie beispielsweise Butanol, Octanol, Laurylalkohol, Cyclohexanol, tert.-Butylcyclohexanol, ethoxylierten bzw. propoxylierten Phenolen eingesetzt werden.

Als Komponente (p4) zur Herstellung der Polyester (A1) geeignet sind insbesondere Verbindungen, die eine gegenüber den funktionellen Gruppen des Polyesters reaktive Gruppe aufweisen. Als modifizierende Komponente (p4) können Diepoxidverbindungen, gegebenenfalls auch Monoepoxidverbindungen verwendet werden. Geeignete Komponenten (p4) sind beispielsweise in der DE-A-40 24 204 auf Seite 4, Zeilen 4 bis 9, beschrieben.

Als Komponente (p4) zur Herstellung der Polyester (A) geeignet sind auch Verbindungen, die außer einer gegenüber den funktionellen Gruppen des Polyesters (A) reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Wegen Einzelheiten wird auf die DE-A-40 24 204, Seite 4, Zeilen 10 bis 49, verwiesen.

Die Herstellung der Polyester (A) erfolgt nach den bekannten Methoden der Veresterung, wie dies beispielsweise in der DE-A-40 24 204, Seite 4, Zeilen 50 bis 65, beschrieben ist. Die Umsetzung erfolgt dabei üblicherweise bei Temperaturen zwischen 180 und 280 Grad C, gegebenenfalls in Gegenwart eines geeigneten Veresterungskatalysators, wie z.B. Lithiumoctoat, Dibutylzinnoxid, Dibutylzinndilaurat, para-Toluolsulfonsäure und ähnlichen.

Üblicherweise wird die Herstellung der Polyester (A) in Gegenwart geringer Mengen eines geeigneten Lösungsmittels als Schleppmittel durchgeführt. Als Schleppmittel werden z. B. aromatische Kohlenwasserstoffe, wie insbesondere Xylol, und (cyclo)aliphatische Kohlenwasserstoffe, z. B. Cyclohexan, eingesetzt. Daneben ist es aber auch möglich, die Polyester lösemittelfrei (Umsetzung in Masse) herzustellen.

Für den Einsatz in den erfindungsgemäßen Beschichtungsmitteln sind ferner prinzipiell alle Polyacrylatharze (B) mit den obengenannten OH-Zahlen und Säurezahlen geeignet. Bevorzugt weisen die Polyacrylatharze ein zahlenmittleres Molekulargewicht von 2.500 bis 5.000 auf.

Bevorzugt werden außerdem Polyacrylatharze eingesetzt, bei denen Glycidylester von am α-C-Atom verzweigten Carbonsäuren (z.B. die unter den Namen Cardura ® im Handel erhältlichen Glycidylester) einpolymerisiert sind.

Besonders bevorzugt werden Polyacrylatharze (B) eingesetzt, die erhältlich sind durch Polymerisation in einem organischen Lösemittel oder einem Lösemittelgemisch und in Gegenwart mindestens eines Polymerisationsinitiators und ggf. in Gegenwart von Reglern von
a1) einem von (a2), (a3), (a4), (a5) und (a6) verschiedenen, mit (a2), (a3), (a4), (a5) und (a6) copolymerisierbaren, im wesentlichen säuregruppenfreien (Meth)acrylsäureester oder einem Gemisch aus solchen Monomeren,
a2) einem mit (a1), (a3), (a4), (a5) und (a6) copolymerisierbaren, von (a5) verschiedenen, ethylenisch ungesättigten Monomer, das mindestens eine Hydroxylgruppe pro Molekül trägt und im wesentlichen säuregruppenfrei ist, oder einem Gemisch aus solchen Monomeren,
a3) einem mindestens eine Säuregruppe, die in die entsprechende Säureaniongruppe überführbar ist, pro Molekül tragenden, mit (a1), (a2), (a4), (a5) und (a6) copolymerisierbaren, ethylenisch ungesättigten Monomer oder einem Gemisch aus solchen Monomeren,
a4) gegebenenfalls einem oder mehreren vinylaromatischen Kohlenwasserstoffen,
a5) mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird,
a6) gegebenenfalls einem mit (a1), (a2), (a3), (a4), und (a5) copolymerisierbaren, von (a1), (a2), (a4) und (a5) verschiedenen, im wesentlichen säuregruppenfreien, ethylenisch ungesättigten Monomer oder einem Gemisch aus solchen Monomeren,
wobei (a1), (a2), (a3), (a4), (a5) und (a6) in Art und Menge so ausgewählt werden, daß das Polyacrylatharz (B) die gewünschte OH-Zahl, Säurezahl und das gewünschte Molekulargewicht aufweist.

Zur Herstellung der erfindungsgemäß eingesetzten Polyacrylatharze kann als Komponente (a1) jeder mit (a2), (a3), (a4), (a5) und (a6) copolymerisierbare, im wesentlichen säuregruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat und cycloaliphatische (Meth)acrylsäureester, wie z.B. Cyclohexyl(meth)acrylat, Isobornyl(meth)acrylat, Dicyclopentaen(meth)acrylat und tert.-Butylcyclohexyl(meth)acrylat genannt.

Als Komponente (a1) können auch Ethyltriglykol(meth)-acrylat und Methoxyoligoglykol(meth)acrylat mit einem zahlenmittleren Molekulargewicht Mn von vorzugsweise 550 oder andere ethoxylierte und/oder propoxylierte hydroxylgruppenfreie (Meth)acrylsäurederivate eingesetzt werden.

Als Komponente (a2) können mit (a1), (a2), (a3), (a4), (a5) und (a6) copolymerisierbare und von (a5) verschiedene, ethylenisch ungesättigte Monomere, die mindestens eine Hydroxylgruppe pro Molekül tragen und im wesentlichen säuregruppenfrei sind oder ein Gemisch aus solchen Monomeren eingesetzt werden. Als Beispiele werden Hydroxyalkylester der Acrylsäure, Methacrylsäure oder einer anderen alpha,beta-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxyalkylester der Acrylsäure oder Methacrylsäure, in denen die Hydroxyalkylgruppe bis zu 20 Kohlenstoffatome enthält, Umsetzungsprodukte aus cyclischen Estern, wie z.B. epsilon-Caprolacton und diesen Hydroxyalkylestern, oder Mischungen aus diesen Hydroxyalkylestern bzw. epsilon-Caprolacton-modifizierten Hydroxyalkylestern eingesetzt.

Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat, 4-Hydroxybutylmethacrylat, Hydroxystearylacrylat und Hydroxystearylmethacrylat genannt. Entsprechende Ester von anderen ungesättigten Säuren, wie z.B. Ethacrylsäure, Crotonsäure und ähnliche Säuren mit bis zu etwa 6 C-Atomen pro Molekül, können auch eingesetzt werden.

Ferner können als Komponente (a2) auch olefinisch ungesättigte Polyole eingesetzt werden. Bevorzugte Polyacrylatharze (B) werden erhalten, wenn als Komponente (a2) zumindest teilweise Trimethylolpropanmonoallylether eingesetzt wird. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere, insbesondere aber anteilsmäßig in Kombination mit anderen der genannten hydroxylgruppenhaltigen Monomeren, eingesetzt werden.

Als Komponente (a3) kann jedes mindestens eine Säuregruppe, vorzugsweise eine Carboxylgruppe, pro Molekül tragende, mit (a1), (a2), (a4), (a5) und (a6) copolymerisierbare, ethylenisch ungesättigte Monomer oder ein Gemisch aus solchen Monomeren eingesetzt werden. Als Komponente (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül eingesetzt werden. Als Beispiele für solche Säuren werden Ethacrylsäure, Crotonsäure, Maleinsäure, Fumarsäure und Itaconsäure genannt. Weiterhin können beispielsweise ethylenisch ungesättigte Sulfon- oder Phosphonsäuren, bzw. deren Teilester, als Komponente (a3) eingesetzt werden. Als Komponente (a3) können auch Maleinsäuremono(meth)acryloyloxyethylester, Bernsteinsäuremono(meth)acryloyloxyethylester und Phthalsäuremono(meth)acryloyloxyethylester eingesetzt werden.

Als Komponente (a4) werden vinylaromatische Kohlenwasserstoffe, wie Styrol, alpha-Alkylstyrole und Vinyltoluol, eingesetzt.

Als Komponente (a5) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versaticsäure eingesetzt. Dieser Glycidylester ist unter dem Namen "Cardura E10" im Handel erhältlich.

Als Komponente (a6) können alle mit (a1), (a2), (a3), (a4) und (a5) copolymerisierbaren, von (a1), (a2), (a3) und (a4) verschiedenen, im wesentlichen säuregruppenfreien ethylenisch ungesättigten Monomere oder Gemische aus solchen Monomeren eingesetzt werden.

Als Komponente (a6) können ein oder mehrere Vinylester von in alpha-Stellung verzweigten Monocarbonsäuren mit 5 bis 18 C-Atomen im Molekül eingesetzt werden. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt.

Besonders bevorzugt werden - wegen der guten Verfügbarkeit- Vinylester von gesättigten aliphatischen Monocarbonsäuren mit 9 bis 11 C-Atomen, die am alpha-C-Atom verzweigt sind, eingesetzt.
Als Komponente (a6) können in Kombination mit anderen als Komponente (a6) geeignet genannten Monomeren auch Polysiloxanmakromonomere eingesetzt werden. Geeignet sind Polysiloxanmakromonomere, die ein zahlenmittleres Molekulargewicht Mn von 1.000 bis 40.000 Dalton, bevorzugt von 2.000 bis 10.000 Dalton, und im Mittel 0,5 bis 2,5, bevorzugt 0,5 bis 1,5, ethylenisch ungesättigte Doppelbindungen pro Molekül aufweisen. Geeignet sind beispielsweise die in der DE-A 38 07 571 auf den Seiten 5 bis 7, die in der DE-A 37 06 095 in den Spalten 3 bis 7, die in der EP-B 358 153 auf den Seiten 3 bis 6 und die in der US-A 4,754,014 in den Spalten 5 bis 9 beschriebenen Polysiloxanmakromonomere. Ferner sind auch andere Acryloxysilan-enthaltende Vinylmonomere mit den obengenannten Molekulargewichten und Gehalten an ethylenisch ungesättigten Doppelbindungen geeignet, beispielsweise Verbindungen, die herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Bevorzugt werden als Komponente (a6) die in der DE-A 44 21 823 angeführten Polysiloxanmakromonomere eingesetzt.

Beispiele für als Komponente (a6) geeignete Polysiloxanmakromonomere sind auch die in der internationalen Patentanmeldung mit der Veröffentlichungsnummer

WO 92/22615 auf Seite 12, Zeile 18, bis Seite 18, Zeile 10, genannten Verbindungen.

Die Einsatzmenge des oder der Polysiloxanmakromonomeren (a6) zur Modifizierung der Acrylatcopolymerisate beträgt weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Copolymerisats (B) eingesetzten Monomeren.

Besonders bevorzugt eingesetzte Acrylatharze werden erhalten durch Polymerisation von
(a1) 5 bis 50 Gew.-%, bevorzugt 10 bis 40 Gew.-%, der Komponente (a1),
(a2) 3 bis 45 Gew.-%, bevorzugt 15 bis 35 Gew.-%, der Komponente (a2),
(a3) 1 bis 15 Gew.-%, bevorzugt 5 bis 10 Gew.-%, der Komponente (a3),
(a4) 10 bis 50 Gew.-%, bevorzugt 15 bis 45 Gew.-%, der Komponente (a4),
(a5) 3 bis 50 Gew.-%, bevorzugt 15 bis 35 Gew.-%, der Komponente (a5) und
(a6) 0 bis 30 Gew.-%, bevorzugt 0 bis 25 Gew.-%, der Komponente (a6),
wobei die Summe der Gewichtsanteile der Komponenten (a1) bis (a6) jeweils 100 Gew.-% beträgt.

Die Herstellung der erfindungsgemäß eingesetzten Polyacrylatharze (B) erfolgt in einem organischen Lösemittel oder Lösemittelgemisch und in Gegenwart mindestens eines Polymerisationsinitiators und ggf. eines Reglers. Als organische Lösemittel, Polymerisationsinitiatoren und Regler werden die für die Herstellung von Polyacrylatharzen üblichen Lösemittel, Regler und Polymerisationsinitiatoren eingesetzt. Dabei können die Lösemittel an der Reaktion mit der vernetzenden Komponente (C) teilnehmen und somit als Reaktivverdünner wirken.

Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmo-nobutylether, Trimethylolpropan, 2-Hydroxypropionsäureethylester und 3-Methyl-3-methoxybutanol sowie Derivate auf Basis Propylenglykol, z.B. Ethylethoxypropionat, Isopropoxypropanol, Methoxypropylacetat u.ä., genannt.

Als Beispiele für brauchbare Polymerisationsinitiatoren werden freie Radikale bildende Initiatoren, wie z.B. tert.-Butylperoxyethylhexanoat, Benzoylperoxid, Azobisisobutyronitril und tert.-Butylperbenzoat genannt. Die Initiatoren werden bevorzugt in einer Menge von 2 bis 25 Gew.-%, besonders bevorzugt von 4 bis 10 Gew.-%, bezogen auf das Gesamtgewicht der Monomeren, eingesetzt.

Als Beispiele für geeignete Regler seien Mercaptane, wie z.B. Mercaptethanol, Thiolglykolsäureester und Chlorwasserstoffe u.ä. genannt. Die Regler werden bevorzugt in einer Menge von 0,1 bis 15 Gew.-%, besonders bevorzugt von 0,5 bis 5 Gew.-%, bezogen auf das Gesamtgewicht der Monomeren, eingesetzt.

Die Polymerisation wird zweckmäßigerweise bei einer Temperatur von 80 bis 160 Grad C, vorzugsweise 110 bis 160 Grad C, durchgeführt.

Ggf. können die Beschichtungmittel noch 0 bis 25 Gew.-%, bezogen auf das Gewicht des Stammlackes ohne Vernetzer-Komponente und bezogen auf den Festkörpergehalt, eines oder mehrerer, von den Komponenten (A) und (B) verschiedenen, hydroxylgruppenhaltiger Bindemittel, wie z.B. hydroxylgruppenhaltige Polyurethanharze, andere Polyester oder andere Acrylatharze, enthalten.

Als Vernetzer (C) enthalten die erfindungsgemäßen Beschichtungsmittel ein oder mehrere Di- und/oder Polyisocyanate mit freien oder blockierten Isocyanatgruppen. So können beliebige organische Polyisocyanate mit aliphatisch, cycloaliphatisch, araliphatisch und/oder aromatisch gebundenen Isocyanatgruppen eingesetzt werden. Bevorzugt werden Polyisocyanate mit 2 bis 5 Isocyanatgruppen pro Molekül eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind 1,2-Ethylendiisocyanat, 1,4-Tetramethylendiiso-cyanat, 1,6-Hexamethylendiisocyanat, 2,2,4- bzw. 2,4,4-Trimethyl-1,6-hexamethylendiisocyanat, 1,12-Dode-candiisocyanat, ω,ω '-Diisocyanatodipropylether, Cyclo-butan-1,3-diisocyanat, Cyclohexan-1,3- und - 1,4-diiso-cyanat, 2,2- und 2,6-Diisocyanato-1-methylcyclohexan, 3-Isocyanatomethyl-3,5,5-trimethylcyclohexyliso-cyanat("Isophorondiisocyanat"), 2,5- und 3,5-Bis(iso-cyanatomethyl)-8-methyl-1,4-methano-decahydronaphthalin, 1,5-, 2,5-, 1,6- und 2,6-Bis(isocyanatomethyl)-4,7-methanohexahydroindan, 1,5-, 2,5-, 1,6- und 2,6-Bis(isocyanato)-4,7-methanhexahydroindan, Dicyclohexyl-2,4'- und - 4,4'-diisocyanat, 2,4- und 2,6-Hexa-hydrotoluylendiisocyanat, Perhydro-2,4'- und -4,4'-di-phenylmethandiisocyanat, ω,ω '-Diisocyanato-1,4-diethyl-benzol, 1,3- und 1,4-Phenylendiisocyanat, 4,4'-Diisocyanato-diphenyl, 4,4'-Diisocyanato-3,3'-dichlordi-phenyl, 4,4'-Diisocyanato-3,3'-dimethoxi-diphenyl, 4,4'-Diisocyanato-3,3'-dimethyl-diphenyl, 4,4'-Diisocyanato-3,3'-diphenyl-diphenyl, 2,4'- und 4,4'-Diiso-cyanato-diphenylmethan, Naphthylen-1,5-diisocyanat, Toluylendiisocyanate, wie 2,4- bzw. 2,6-Toluylendiiso-cyanat, N,N'-(4,4'-Dimethyl-3,3'-diisocyanatodiphenyl)-uretdion, m-Xylylendiisocyanat, Dicyclohexyl-methandiisocyanat, Tetramethylxylylendiisocyanat, aber auch Triisocyanate, wie 2,4,4'-Triisocyanatodiphenyl-ether, 4,4',4"-Triisocyanatotriphenylmethan. Bevorzugt werden, ggf. in Kombination mit den obengenannten Polyisocyanaten, Isocyanuratgruppen und/oder Biuretgruppen und/oder Allophanatgruppen und/oder Urethangruppen und/oder Harnstoffgruppen aufweisende Polyisocyanate eingesetzt. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische und/oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'diisocyanat, Dicyclohexylmethan-4,4'-diisocyanat und 1,3-bis-(2-Isocyanatopropyl-2-)benzol (TMXDI) oder Mischungen aus diesen Polyisocyanaten, ganz besonders bevorzugt Isocyanate auf Basis Hexamethylendiisocyanat und/oder Isophorondiisocyanat, eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendüsocyanat unter Verwendung von geeigneten Katalysatoren entstehen, eingesetzt. Die Polyisocyanatkomponente (C) kann im übrigen auch aus beliebigen Gemischen der genannten Polyisocyanate bestehen.

Die Polyisocyanatkomponente (C) wird bevorzugt in Form der freie Isocyanatgruppen enthaltenden Verbindungen eingesetzt und die Beschichtungsmittel entsprechend als Zweikomponentenlacke formuliert. In diesem Fall kann ein Teil der insgesamt eingesetzten Lösemittel auch der vernetzer-Komponente zugesetzt werden.

Es können aber auch Einkomponentenlacke auf der Basis blockierter Isocyanate formuliert werden, wenn zur Blockierung der Polyisocyanate Blockierungsmittel mit einer ausreichend tiefen Deblockierungstemperatur eingesetzt werden. Derartige Blockierungsmittel sind dem Fachmann gut bekannt und brauchen hier nicht näher erläutert zu werden.

Die Isocyanatkomponente (C) wird üblicherweise in einer solchen Menge eingesetzt, daß das Äquivalentverhältnis von OH-Gruppen der Bindemittel und ggf. von OH-Gruppen der Lichtschutzmittel zu den Isocyanatgruppen des Vernetzers zwischen 1,2 : 1 und 0,7 : 1 liegt.

Ferner kann das erfindungsgemäße Beschichtungsmittel ggf. noch weitere Vernetzungsmittel enthalten, insbesondere mit den Hydroxylgruppen der Bindemittel und ggf. der Lichtschutzmittel unter Ether- und/oder Esterbildung vernetzende Komponenten auf Triazinbasis. Bei den unter Etherbildung mit den Hydroxylgruppen der Bindemittel reagierenden Vernetzern handelt es sich um Aminoplastharze. Aminoplastharze sind dem Fachmann gut bekannt und werden von vielen Firmen als Verkaufsprodukte angeboten. Es handelt sich um Kondensationsprodukte aus Aldehyden, insbesondere Formaldehyd, und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Es werden insbesondere mit niedrigen Alkoholen, insbesondere mit Methanol oder Butanol veretherte Melamin-Formaldehydharze eingesetzt. Ganz besonders bevorzugt werden mit niedrigen Alkoholen, insbesondere mit Methanol und/oder Ethanol und/oder Butanol veretherte Melamin-Formaldehydharze, die im statistischen Mittel pro Triazinring noch 0,1 bis 0,25 an Stickstoffatome gebundene Wasserstoffatome enthalten, als weitere Vernetzer eingesetzt.

Bei den unter Estergruppenbildung mit den Hydroxylgruppen des Bindemittels reagierenden Vernetzern auf Triazin-Basis handelt es sich um Umesterungsvernetzer, wie bevorzugt Tris(alkoxycarbonylamino)triazin o.ä., wie beispielsweise auch in der EP-A-604 922 beschrieben.

Dieses weitere Vernetzungsmittel wird üblicherweise in einer Menge von 0 bis 30 Gew.-%, bezogen auf das Gewicht der Isocyanatkomponente, eingesetzt. Wenn das Beschichtungsmittel allerdings zur Beschichtung thermisch empfindlicher Substrate eingesetzt wird, enthält es bevorzugt keine weiteren Vernetzungsmittel bzw. nur solche weiteren Vernetzungsmittel, die auch bei niedrigen Temperaturen härtbar sind.

Es ist erfindungswesentlich, daß die Beschichtungsmittel als Lichtschutzmittel eine Kombination aus
d) einem oder mehreren Lichtschutzmitteln (L1) auf Basis eines UV-Absorbers in einer Menge von mindestens 3 Gew.-%, bezogen auf das Beschichtungsmittel, und
e) einem oder mehreren Lichtschutzmitteln (L2) auf der Basis sterisch gehinderter Amine, die aminoetherfunktionalisiert sind, enthalten.

Erfindungsgemäß ist das oder sind die Lichtschutzmittel (L1) in dem erfindungsgemäßen Beschichtungsmittel in einer Menge von mindestens 3 Gew.-% enthalten. Die mengenmäßige Obergrenze variiert je nach Beschichtungsmittel und ist in allen Fällen dann erreicht, wenn eine Erhöhung der Menge an Lichtschutzmittel (L1) keinen weiteren positiven Effekt mehr bewirkt, sondern die Gefahr besteht, daß aufgrund des hohen Füllgrades andere wertvolle technologische Eigenschaften der Beschichtungsmittel in Mitleidenschaft gezogen werden. Erfindungsgemäß von Vorteil sind Mengen von 3 bis 10 Gew.-%, weil sich hierdurch bei allen Varianten der erfindungsgemäßen Beschichtungsmittel die gewünschten Effekte mit einer vergleichsweise geringen Menge erzielen lassen. Innerhalb dieses Bereichs ist derjenige von 3 bis 7 Gew.-% hervorzuheben. Er stellt hinsichtlich der erfindungsgemäß zu verwendenden Menge und den erzielten Effekten das Optimum dar.

Das Mengenverhältnis der Lichtschutzmittel (L1) : (L2) kann breit variieren und in hervorragender Weise den jeweiligen Beschichtungsmitteln angepaßt werden. Erfindungsgemäß sind Mengenverhältnisse von (L1) : (L2) von 0, 1 bis 10 von Vorteil und werden deshalb bevorzugt verwendet. Innerhalb dieses Bereichs sind Mengenverhältnisse von 0,5 bis 8 besonders und solche von 1 bis 7 ganz besonders bevorzugt.

Als Lichtschutzmittel (L1) auf Basis eines UV-Absorbers werden bevorzugt Lichtschutzmittel vom Benztriazol-Typ und/oder Triazin-Typ eingesetzt. Als Lichtschutzmittel (L1) geeignet sind daher z.B. die im Handel unter den folgenden Namen erhältlichen Produkte:
Tinuvin® 384 der Firma Ciba Geigy, Lichtschutzmittel auf Basis Iso-octyl-3-(3-(2H-benzotriazol-2-yl)-5-tert.-butyl-4-hydroxyphenylpropionat, mittleres Molekulargewicht 451,6
Tinuvin® 1130 der Firma Ciba Geigy, Lichtschutzmittel auf Basis des Reaktionsproduktes aus Polyethylenglykol 300 und Methyl-3-[3-(2H-benzotriazol-2-yl)-5-tert.butyl-4-hydroxyphenyl]propionat, mittleres Molekulargewicht > 600
CYAGARD® UV-1164L der Firma Dyna Cytec, Lichtschutzmittel auf Basis 2,4-Bis(2,4-dimethylphenyl)-6-(2-hydroxy-4-isooctyloxyphenyl)-1,3,5-triazin, mittleres Molekulargewicht 510, 65 %ig in Xylol

Besonders bevorzugt werden als Lichtschutzmittel (L1) immobilisierbare Lichtschutzmittel auf Benztriazol- und/der Triazin-Basis eingesetzt, d.h. Lichtschutzmittel, die pro Molekül mindestens 1 gegenüber dem Vernetzungsmittel reaktive Gruppe, insbesondere mindestens eine aliphatische OH-Gruppe, enthalten.

Beispiele für solche besonders bevorzugt als Komponente (L1) eingesetzten, immobilisierbaren Lichtschutzmittel sind die im Handel unter den folgenden Namen erhältlichen Produkte:
Tinuvin® 400 der Firma Ciba Geigy, Lichtschutzmittel auf Basis einer Mischung aus 2-[4-((2-Hydroxy-3-dodecyloxypropyl)oxy)-2-hydroxyphenyl]-4,6-bis(2,4-dimethylphenyl)-1,3,5-triazin und 2-[4-((2-Hydroxy-3-tridecyloxypropyl)oxy)-2-hydroxyphenyl]-4,6-bis(2,4-dimethylphenyl)-1,3,5-triazin, mittleres Molekulargewicht 654, 85%ig in 1-Methoxy-2-propanol
CGL 1545 der Firma Ciba Geigy, Lichtschutzmittel auf Basis 2-[4-((2-Hydroxy-3-octyloxypropyl)oxy)-2-hydroxyphenyl]-4,6-bis(2,4-dimethylphenyl)-1,3,5-triazin, mittleres Molekulargewicht 583
CYAGARD® UV-3801 der Firma Dyno Cytec, immobilisierbares Lichtschutzmittel auf Basis Triazin, mittleres Molekulargewicht 498
CYAGARD® UV-3925 der Firma Dyno Cytec, immobilisierbares Lichtschutzmittel auf Basis Triazin, mittleres Molekulargewicht 541

Als Lichtschutzmittel (L2) sind alle Lichtschutzmittel auf Basis sterisch gehinderter Amine (HALS) geeignet, bei denen die Aminofunktion ethersubstiuiert ist (in der vorliegenden Anmeldung kurz als aminoetherfunktionalisiert bezeichnet). Als Lichtschutzmittel (L2) geeignet sind daher insbesondere aminoetherfunktionalisierte, substituierte Piperidin-Derivate, wie z.B. aminoetherfunktionalisierte 2,2,6,6,-Tetramethylpiperidin-Derivate.

Aufgrund der Aminoetherfunktion hat das Lichtschutzmittel (L2) nur schwachbasischen Charakter. Es ist daher bevorzugt, daß als Lichtschutzmittel (L2) Lichtschutzmittel auf Basis sterisch gehinderter Amine eingesetzt werden, die einen pK_{B}-Wert von mindestens 9,0, bevorzugt von mindestens 9,5, aufweisen. Dabei werden außerdem bevorzugt als Lichtschutzmittel (L2) solche sterisch gehinderten Amine eingesetzt, die sowohl unter den Lager- und Applikationsbedingungen als auch insbesondere bei den Gebrauchsbedingungen der beschichteten Substrate (besonders bei Feuchtebelastung) nicht hydrolysierbar sind.

Geeignet als Komponente (L2) sind beispielsweise die im Handel unter den folgenden Namen erhältlichen Produkte:
Tinuvin® 123 der Firma Ciba Geigy, Lichtschutzmittel auf Basis Bis(1-octyloxy-2,2,6,6-tetramethyl-4-piperidyl)sebacat (mittleres Molekulargewicht 737; pK_{B}-Wert 9,6), welches besonders bevorzugt verwendet wird, und
die unter dem Namen Sanol® der Firma Sankyo erhältlichen, entsprechenden Lichtschutzmittel.

Gleichfalls besonders bevorzugt werden als Lichtschutzmittel (L2) immobilisierbare, aminoetherfunktionalisiserte Lichtschutzmittel auf Basis sterisch gehinderter Amine eingesetzt, d.h. Lichtschutzmittel, die pro Molekül mindestens 1 gegenüber dem Vernetzungsmittel reaktive Gruppe, insbesondere mindestens 1 OH-Gruppe, enthalten. Als Lichtschutzmittel (L2) besonders bevorzugt eingesetzt werden daher insbesondere aminoetherfunktionalisierte, substituierte Piperidin-Derivate, wie z.B. aminoetherfunktionalisierte 2,2,6,6,-Tetramethylpiperidin-Derivate, die pro Molekül mindestens 1 gegenüber dem Vernetzungsmittel reaktive Gruppe, insbesondere mindestens 1 OH-Gruppe, enthalten.

Beispiele für solche besonders bevorzugt als Komponente (L2) eingesetzten, immobilisierbaren Lichtschutzmittel sind auch die entsprechenden im Handel erhältlichen Produkte.

Das erfindungsgemäße Beschichtungsmittel enthält außerdem als Komponente (D) übliche, zur Herstellung von Lacken gebräuchliche organische Lösemittel, bevorzugt in einer Menge von 0 bis 69 Gew.-%, bezogen auf das Gewicht des Beschichtungsmittels. Üblicherweise wird dabei ein Großteil der Lösemittel durch Verwendung der Bindemittel in Form von Lösungen oder Dispersionen in die Beschichtungsmittel eingebracht. Darüber hinaus können den Beschichtungsmitteln aber noch zusätzlich weitere Lösemittel zugesetzt werden, um in dem Fachmann bekannter Weise gezielt die Eigenschaften des Beschichtungsmittels zu steuern.

Bevorzugt enthält das erfindungsgemäße Beschichtungsmittel ferner noch 0 bis 5 Gew.-%, besonders bevorzugt 0 bis 2 Gew.-%, eines oder mehrerer Celluloseester, jeweils bezogen auf den Festkörpergehalt des Stammlacks und bezogen auf den Festkörpergehalt des Celluloseesters. Beispiele für geeignete Celluloseester sind Cellulosenitrat, Cellulosepropionat, Cellulosebutyrat, Celluloseacetobutyrat, Celluloseacetopropionat, Mischungen derselben und ähnliches. Es können ferner selbstverständlich auch Mischungen verschiedener Celluloseester eingesetzt werden. Bevorzugt wird Celluloseacetobutyrat eingesetzt.

Das erfindungsgemäße Beschichtungsmittel kann außerdem noch weitere, für die jeweilige Formulierung gebräuchliche Zusätze, wie z.B. Stabilisatoren wie Antioxidantien und Radikalfänger, Verlaufshilfsmittel, Rheologieadditive usw. enthalten, bevorzugt in einer Menge von 0 bis 1 Gew.-%, bezogen auf das Gesamtgewicht des Stammlacks.

Das erfindungsgemäße Beschichtungsmittel kommt insbesondere als Decklack und ganz besonders bevorzugt als Klarlack zum Einsatz. Es enthält daher im allgemeinen keine oder nur transparente Pigmente. Enstprechend enthält es daher - falls überhaupt - nur transparente Füllstoffe.

Das erfindungsgemäße Beschichtungsmittel wird im allgemeinen mittels Mischen und ggf. Dispergieren aus den einzelnen Bestandteilen hergestellt.

Die unter Verwendung der erfindungsgemäßen Beschichtungsmittel hergestellten Beschichtungen zeichnen sich insbesondere durch eine gute Haftung auf Kunststoffen auch nach Feuchtebelastung sowie durch eine gleichzeitig gute Witterungs- und Chemikalienbeständigkeit bei gleichzeitig guter Kälteschlagzähigkeit aus. Gegenstand der Erfindung ist daher auch die Verwendung der Beschichtungesmittel zur Herstellung von Beschichtungen mit diesen Eigenschaften.

Das erfindungsgemäße Beschichtungsmittel wird bevorzugt zur Beschichtung von Kunststoffen, insbesondere von eingefärbten, thermoplastischen Kunststoffen oder Kunststoff-Blends, wie sie insbesondere für großflächige Automobilaußenteile verwendet werden, eingesetzt. Bevorzugt wird es außerdem für die Beschichtung von Polycarbonat enthaltenden Kunststoffen, wie z.B. Polycarbonat oder Polycarbonat/Polybutylenterephthalt-Blends, eingesetzt.

Das erfindungsgemäße Beschichtungsmittel kann selbstverständlich aber auch für andere Lackierungen eingesetzt werden. Es kann daher auch auf andere Substrate, wie beispielsweise Metall, Holz oder Papier, appliziert werden. Die Applikation erfolgt mit Hilfe üblicher Methoden, beispielsweise Spritzen, Rakeln, Tauchen oder Streichen.

Mit dem erfindungsgemäßen Beschichtungsmittel können auch andere grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE,UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es kann auch für die Beschichtung von üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen müssen diese vor der Beschichtung in bekannter Weise einer Vorbehandlung, wie Plasma oder Beflammen, unterzogen werden.

Nachfolgend wird die Erfindung anhand von Ausführungsbeispielen näher erläutert. Dabei bedeuten alle Teile Gewichtsteile, sofern nicht ausdrücklich etwas anderes angegeben wird.

### Herstellungsbeispiele 1 bis 3

Für das Beispiel und den Vergleichsversuch V1 wurden zunächst die Acrylatharzlösung (B), die Polyesterharzlösung (A) und die Kunststofftafeln hergestellt.

### Herstellungsbeispiel 1

### Herstellung einer Acrylatharzlösung (B)

In einem 41-Stahlkessel, ausgestattet mit Monomerzulauf, Initiatorzulauf, Rührer und Rückflußkühler, wurden 382,5 Teile Cardura® E 10 (Glycidylester der Versaticsäure) und 217,5 Teile Shellsol® A vorgelegt und auf 142 °C aufgeheizt. Es wurde eine Lösung von 47,0 Teilen Di-tert.-butylperoxid in 147,2 Teilen Xylol so zugegeben, daß die Zugabe in 4,75 h beendet war. Mit 15 min Verzögerung wurde eine Mischung von 250,7 Teilen Methylmethacrylat, 356,2 Teilen Styrol, 276,9 Teilen Hydroxyethylmethacrylat, 112,2 Teilen Acrylsäure und 6,6 Teilen Mercaptoethanol so zugegeben, daß die Zugabe in 4 h beendet war. Nach Zugabeende des Initiatorzulaufs wurde noch 180 min bei 142 °C nachpolymerisiert. Danach wird die Mischung auf eine Temperatur von unter 100 °C gekühlt und mit 338,2 Teilen Xylol, 93,1 Teilen Shellsol® A, 344,8 Teilen Butylacetat und 79,6 Teilen Butylglykolacetat angelöst. Es resultierte eine Lösung des Polyacrylatharzes mit 54 % nichtflüchtigem Anteil (60 min 130 °C Umluftofen), mit einer Säurezahl von 7 mgKOH/g und einer OH-Zahl von 137 mgKOH/g.

### Herstellungsbeispiel 2

### Herstellung einer Polyesterharzlösung (A)

In einer für Polykondensationsreaktionen geeigneten Stahlapparatur wurden 946,8 Teile Hexandiol-1,6, 299,1 Teile Trimethylolpropan, 150,3 Teile Phthalsäureanhydrid, 833,8 Teile Isophthalsäureanhydrid, 270,1 Teile Adipinsäure und 87,5 Teile Cyclohexan eingewogen und so lange auf maximal 240 °C Produkttemperatur erhitzt, bis das Gemisch eine Säurezahl < 2 mgKOH/g aufwies. Nach Abdestillieren des Schleppmittels Cyclohexan wurde auf eine Temperatur von unter 100 °C gekühlt und mit 558,6 Teilen Butylacetat angelöst. Es resultierte eine Lösung eines Polyesterharzes mit 80 % nichtflüchtigem Anteil (60 min 130 °C Umluftofen) und einer OH-Zahl von 170 mgKOH/g.

### Herstellungsbeispiel 3

### Herstellung der eingefärbten Kunststoff-Blends und der Prüftafeln

Die zu lackierenden Kunststofftafeln aus dem gelben PC/PBT-Blend 46023 und dem roten PC/PBT-Blend 66054, beide von der Firma BASF AG, wurden in üblicher und bekannter Weise - mittels Extrusion aus den entsprechenden Rohstoffen unter Verwendung von üblichen Stabilisatoren und ggf. Pigmenten und anschließend unter Verwendung des sogenannten "Injection-molding"-Verfahrens hergestellt.

### Beispiel und Vergleichsversuch V1

### Herstellung des Beschichtungsmittels des Beispiels

Unter Rühren mittels eines Laborrührers wurde aus 44,8 Teilen der Polyesterharzlösung (A) gemäß dem Herstellungsbeispiel 2, 28,4 Teilen der Polyacrylatlösung (B) gemäß den Herstellungsbeispiel 1, 3,6 Teilen einer 24%igen Lösung eines handelsüblichen Celluloseacetobutyrats (CAB) in Butylacetat, 1,9 Teilen des handelsüblichen Silikonadditivs Baysilon^{R} OL 44 der Firma Bayer AG, 12,5 Teilen Butylacetat, 5,5 Teilen Xylol, 0,3 Teilen des Lichtschutzmittels (L2) Tinuvin^{R} 123 der Firma Ciba Geigy (Bis(1-octyloxi-2,2,6,6-tetramethyl-4-piperidyl)sebacat mit einem mittleren Molekulargewicht von 737,2) und einem pK_{B} -Wert von 9,6 und 3 Teilen des Lichtschutzmittels (L1) CGL 1545 der Firma Ciba Geigy (2-4-((2-Hydroxy-3-octyloxypropyl)oxy)-2-hydroxyphenyl-4,6-bis(2,4-dimethylphenyl)-1,3,5-triazin, mittleres Molekulargewicht 583) ein Stammlack hergestellt.

Der so erhaltenen Stammlack wurde vor seiner Applikation unter Rühren mittels eines Laborrührers mit einer 75 %igen Lösung in Butylacetat eines handelsüblichen Isocyanates auf Basis eines trimerisierten Hexamethylendiisocyanates (Desmodur® N der Bayer AG) versetzt. Die Menge der zugegebenen Isocyanatlösung wurde dabei so gewählt, daß das Verhältnis der NCO-Gruppen zu den OH-Gruppen der Bindemittel und ggf. der Lichtschutzmittel 1 : 1,18 betrug.

### Herstellung des Beschichtungsmittels des Vergleichsversuchs V1

Das Beispiel wurde mit 45,64 Teilen der Polyesterharzlösung (A) gemäß dem Herstellungsbeispiel 2, 28,978 Teilen der Polyacrylatlösung (B) gemäß den Herstellungsbeispiel 1, 3,695 Teilen der Lösung des Celluloseacetobutyrats (CAB), 1,971 Teilen des Silikonadditivs Baysilon^{R} OL 44 , 12,809 Teilen Butylacetat, 5,616 Teilen Xylol, 0,138 Teilen des Lichtschutzmittels (L2) Tinuvin^{R} 123 und 1,253 Teilen des Lichtschutzmittels (L1) CGL 1545 wiederholt.

### Applikation des Klarlacks des Beispiels und des Vergleichsversuchs V1

Die obenbeschriebenen Kunststofftafeln des Herstellungsbeispiels 3 wurden vor der Beschichtung mit einem mit i-Propanol getränkten Lappen abgewischt. Die obenbeschriebenen Klarlacke des Beispiels und des Vergleichsversuchs V1 wurden innerhalb von 2 h nach Isocyanatzugabe über eine pneumatische Spritzpistole mit Luftzerstäubung so appliziert, daß eine Trockenfilmschichtdicke von 32 ± 2 µm resultierte. Die flüssigen Filme wurden 10 min bei Raumtemperatur abgelüftet und anschließend 45 min bei 90 °C im Umluftofen gehärtet. Danach wurden die Prüftafeln 8 Tage bei 23 °C und 50 % rel. Feuchte gelagert. Anschließend wurde die Haftung mit Hilfe des Gitterschnitt/Klebebandabriß-Tests, mit Hilfe des Dampfstrahltest (100 bar, 80 °C, Winkel Strahl/Ebene 90 °, 10 cm) und mit Hilfe des manuellen Schältests bestimmt. Beim Dampfstrahltest wird mit einem Messer ein Andreaskreuz durch den Lackfilm hindurch bis auf das Substrat geschnitten und auf den Schnittpunkt ein Dampfstrahl gerichtet. Anschließend wird die Haftung beurteilt. Beim manuellen Schältest wird wird mit einem Messer in den Lackfilm geschnitten und versucht, den Lackfilm vom Substrat zu schälen bzw. zu kratzen.

Die Anfangshaftung war in allen Fällen in Ordnung.

### UV-Bewitterung

Die Prüftafeln wurden in einem XENOTEST 1200 Gerät der Firma Heraeus bewittert (3 luftgekühlte Xenonhochdruckbrenner mit je 4500 W; Quarzinnen- und -außenfilter; 3 Drittelschalen UV-Spezialglas; Gleichlauf, 17 min Trockenphase und 3 min Besprühung mit vollentsalztem Wasser). Die Bestrahlungsintensität betrug 70 W/m² bei 300 - 400 nm, die Schwarztafeltemperatur ca. 38 °C. Die Luftfeuchte betrug > 60 % während der Trockenphase und > 95 % während der Beregnungsphase. Ausgewertet wurden das Erscheinungsbild der Klarlacke , umfassend Glanzgrad und Rißbildung.

Es zeigte sich, daß in den erfindungsgemäßen Klarlacken auf den Prüftafeln des Beispiels keine Risse vorhanden waren. In den nicht erfindungsgemäßen Klarlacken auf den Prüftafeln des Vergleichsversuchs V1 war eine geringe Anzahl von Risse zu erkennen. Die Abnahme des Glanzes (Glanzmessung unter einem Winkel von 20°) war bei den Prüftafeln des Beispiels signifikant geringer als bei den Prüftafeln des Vergleichsversuchs V1. Die durch die UV-Bewitterung hervorgerufene Farbtonverschiebung dE gemäß der CIELAB-Farbabstandsformel der Prüftafeln wurde mit einem X-Rite^{R}-Farbmeßgerät der Firma X-Rite gemessen. Die Farbtonverschiebung war bei den Prüftafeln des Beispiels gegenüber der Farbtonverschiebung bei den Prüftafeln des Vergleichsversuchs V1 um 27% reduziert. Insgesamt waren die Prüftafeln des Beispiels nach der UV-Bewitterung in ihrem optischen Gesamteindruck den Prüftafeln des Vergleichsversuchs V1 überlegen.

## Patentansprüche

1. Polyurethan-Beschichtungsmittel, enthaltend
a) ein oder mehrere Polyesterharze (A),
b) ein oder mehrere Polyacrylatharze (B),
c) ein oder mehrere Di- und/oder Polyisocyanate (C) mit freien oder blockierten Isocyanatgruppen,
d) ein oder mehrere Lichtschutzmittel (L1) auf Basis eines UV-Absorbers,
e) ein oder mehrere Lichtschutzmittel (L2) auf der Basis sterisch gehinderter Amine und
f) ein oder mehrere organische Lösemittel (D),
**dadurch gekennzeichnet, daß**
1.) der Polyester (A) eine OH-Zahl von 80 bis 200 mg KOH/g und eine Säurezahl < 10 mg KOH/g aufweist,
2.) das Polyacrylatharz (B) eine OH-Zahl von 80 bis 200 mg KOH/g und eine Säurezahl < 20 mg KOH/g aufweist,
3.) das Lichtschutzmittel (L2) auf Basis sterisch gehinderter Amine aminoetherfunktionalisiert ist und
4.) das Lichtschutzmittel (L1) hierin in einer Menge von mindestens 3 Gew.-%, bezogen auf das Beschichtungsmittel, enthalten ist.

2. Beschichtungsmittel nach Anspruch 1, **dadurch gekennzeichnet, daß** das Polyacrylatharz (B) eine OH-Zahl von 100 bis 150 mg KOH/g und/oder eine Säurezahl von < 10 mg KOH/g und/oder der Polyester (A) eine OH-Zahl von 130 bis 180 mg KOH/g und/oder eine Säurezahl von < 5 mg KOH/g aufweisen.

3. Beschichtungsmittel nach Anspruch 1 oder 2, **dadurch gekennzeichnet, daß** der Polyester aromatische Di- und/oder Polycarbonsäuren, ggf. in Kombination mit Monocarbonsäuren, einkondensiert enthält und/oder das Polyacrylatharz (B) glycidylgruppenhaltige Ester von am α-C-Atom verzweigten Carbonsäuren einpolymerisiert enthält.

4. Beschichtungsmittel nach einem der Ansprüche 1 bis 3, **dadurch gekennzeichnet, daß** es aliphatische und/oder cycloaliphatische Di- und/oder Polyisocyanate enthält.

5. Beschichtungsmittel nach einem der Ansprüche 1 bis 4, **dadurch gekennzeichnet, daß** es Isocyanate auf Basis Isophorondiisocyanat und/oder Hexamethylendiisocyanat und/oder mit den Hydroxylgruppen des Bindemittels unter Ether- und/oder Esterbildung vernetzende Komponenten auf Triazinbasis enthält.

6. Beschichtungsmittel nach einem der Ansprüche 1 bis 5, **dadurch gekennzeichnet, daß** es die Polyesterkomponente (A) und die Polyacrylatkomponente (B) in solchen Mengen enthält, daß die Mischung aus
a) 40 bis 80 Gew.-% der Komponente (A) und
b) 60 bis 20 Gew.-% der Komponente (B) besteht,
wobei die Angaben jeweils bezogen sind auf den Festkörper der Harze und wobei die Summe der Gew.-%-Angaben der Komponenten (A) und (B) jeweils 100 Gew.-% beträgt.

7. Beschichtungsmittel nach einem der Ansprüche 1 bis 6, **dadurch gekennzeichnet, daß** es als Lichtschutzmittel (L2) aminoetherfunktionalisierte, substituierte Piperdin-Derivate und/oder Lichtschutzmittel (L2) mit einem pK_{B}-Wert von mindestens 9,0 enthält.

8. Beschichtungsmittel nach einem der Ansprüche 1 bis 7, **dadurch gekennzeichnet, daß** das Lichtschutzmittel (L1) und/oder (L2) pro Molekül mindestens eine gegenüber dem Vemetzer reaktive Gruppe aufweist.

9. Beschichtungsmittel nach einem der Ansprüche 1 bis 8, **dadurch gekennzeichnet, daß** das Lichtschutzmittel (L1) vom Benztriazol-Typ und/oder vom Triazin-Typ ist.

10. Verfahren zur Herstellung der Beschichtungsmittel nach einem der Ansprüche 1 bis 9, **dadurch gekennzeichnet, daß** sie durch Mischen und ggf. Dispergieren der einzelnen Bestandteile hergestellt werden.

11. Verwendung der Beschichtungsmittel nach einem der Ansprüche 1 bis 9 als Decklack oder als Klarlack.

12. Verwendung nach Anspruch 11 zur Beschichtung von Kunststoffen.

13. Verwendung nach Anspruch 11 oder 12 zur Beschichtung von thermoplastischen, eingefärbten Kunststoffen oder Kunststoff-Blends.

## Claims

1. A polyurethane coating composition comprising
a) one or more polyester resins (A),
b) one or more polyacrylate resins (B),
c) one or more di- and/or polyisocyanates (C) having free or blocked isocyanate groups,
d) one or more light stabilizers (L1) based on a UV absorber,
e) one or more light stabilizers (L2) based on sterically hindered amines, and
f) one or more organic solvents (D).
wherein
1.) the polyester (A) has an OH number of from 80 to 200 mg KOH/g and an acid number < 10 mg KOH/g,
2.) the polyacrylate resin (B) has an OH number of from 80 to 200 mg KOH/g and an acid number < 20 mg KOH/g,
3.) the light stabilizer (L2) based on sterically hindered amines is amino ether functionalized and
4.) the light stablizer (L1) is included herein in an amount of at least 3% by weight, based on the coating composition.

2. The coating composition as claimed in claim 1 wherein the polyacrylate resin (B) has an OH number of from 100 to 150 mg KOH/g and/or an acid number of < 10 mg KOH/g and/or the polyester (A) has an OH number of from 130 to 180 mg KOH/g and/or an acid number < 5 mg KOH/g.

3. The coating composition as claimed in claim 1 or 2, wherein the polyester comprises in cocondensed form aromatic di- and/or polycarboxylic acids, alone or in combination with monocarboxylic acids, and/or the polyacrylate resin (B) comprises in copolymerized form glycidyl-containing esters of carboxylic acids branched on the α carbon atom.

4. The coating composition as claimed in one of claims 1 to 3, which comprises aliphatic and/or cycloaliphatic di- and/or polyisocyanates.

5. The coating composition as claimed in one of claims 1 to 4, which comprises isocyanates based on isophorone diisocyanate and/or hexamethylene diisocyanate and/or triazine-based components which crosslink with the hydroxyl groups of the binder with the formation of ethers and/or esters.

6. The coating composition as claimed in one of claims 1 to 5, which comprises the polyester component (A) and the polyacrylate component (B) in amounts such that the mixture consists of
a) from 40 to 80% by weight of component (A), and
b) from 60 to 20% by weight of component (B),
the figures being based in each case on the solids content of the resins, and the sum of the percentages by weight of components (A) and (B) being in each case 100% by weight.

7. The coating composition as claimed in one of claims 1 to 6, wherein said light stabilizers (L2) comprise amino ether functionalized, substituted piperidine derivatives and/or light stabilizers (L2) having a pK_{b} of at least 9.0.

8. The coating composition as claimed in one of claims 1 to 7, wherein said light stabilizer (L1) and/or (L2) contains per molecule at least one group which is reactive with respect to the crosslinker.

9. The coating composition as claimed in one of claims 1 to 8, wherein said light stabilizer (L1) is of the benzotriazole type and/or of the triazine type.

10. A process for preparing the coating composition as claimed in one of claims 1 to 9, which comprises mixing and, if desired, dispersing the individual components.

11. The use of the coating composition as claimed in one of claims 1 to 9 as a topcoat or as a clearcoat.

12. The use as claimed in claim 11 to coat plastics.

13. The use as claimed in claim 11 or 12 to coat colored thermoplastics or polymer blends.

## Revendications

1. Composition de revêtement polyuréthanne contenant
a) une ou plusieurs résines polyester (A),
b) une ou plusieurs résines polyacrylate (B),
c) un ou plusieurs di- et/ou polyisocyanates (C) à groupes isocyanate libres ou bloqués,
d) un ou plusieurs photoprotecteurs (L1) à base d'un absorbeur UV,
e) un ou plusieurs photoprotecteurs (L2) à base d'amines à empêchement stérique et
f) un ou plusieurs solvants organiques (D),
**caractérisée en ce que**
1) le polyester (A) présente un indice de groupes OH de 80 à 200 mg de KOH/g et un indice d'acide < 10 mg de KOH/g,
2) la résine polyacrylate (B) présente un indice de groupes OH de 80 à 200 mg de KOH/g et un indice d'acide < 20 mg de KOH/g,
3) le photoprotecteur (L2) à base d'amines à empêchement stérique est fonctionnalisé par des groupes aminoéther et
4) le photoprotecteur (L1) est contenu dans celle-ci en une quantité d'au moins 3 % en poids, par rapport à la composition de revêtement.

2. Composition de revêtement selon la revendication 1, **caractérisée en ce que** la résine polyacrylate (B) présente un indice de groupes OH de 100 à 150 mg de KOH/g et/ou un indice d'acide de < 10 mg de KOH/g et/ou le polyester (A) présente un indice de groupes OH de 130 à 180 mg de KOH/g et/ou un indice d'acide < 5 mg de KOH/g.

3. Composition de revêtement selon la revendication 1 ou 2, **caractérisée en ce que** le polyester contient, co-condensés, des acides di- et/ou polycarboxyliques aromatiques, éventuellement en association avec des acides monocarboxyliques et/ou la résine polyacrylate (B) contient des esters copolymérisés, contenant des groupes glycidyle, d'acides carboxyliques ramifiés au niveau de l'atome de carbone α.

4. Composition de revêtement selon l'une quelconque des revendications 1 à 3, **caractérisée en ce qu'**elle contient des di- et/ou polyisocyanates aliphatiques et/ou cycloaliphatiques.

5. Composition de revêtement selon l'une quelconque des revendications 1 à 4, **caractérisée en ce qu'**elle contient des isocyanates à base d'isophorone-diisocyanate et/ou d'hexaméthylène-diisocyanate et/ou des composants à base de triazine réticulables avec les groupes hydroxy du liant, avec formation d'éthers et/ou d'esters.

6. Composition de revêtement selon l'une quelconque des revendications 1 à 5, **caractérisée en ce qu'**elle contient le composant polyester (A) et le composant polyacrylate (B) en quantités telles que le mélange consiste en
a) 40 à 80 % en poids du composant (A) et
b) 60 à 20 % en poids du composant (B),
les données étant chacune par rapport à la matière solide des résines et la somme des données en % en poids des composants (A) et (B) étant chaque fois de 100 % en poids.

7. Composition de revêtement selon l'une quelconque des revendications 1 à 6, **caractérisée en ce qu'**elle contient en tant que photoprotecteur (L2) des dérivés de pipéridine substitués, fonctionnalisés avec des groupes aminoéther, et/ou des photoprotecteurs (L2) ayant pK_{B} d'au moins 9,0.

8. Composition de revêtement selon l'une quelconque des revendications 1 à 7, **caractérisée en ce que** le photoprotecteur (L1) et/ou le photoprotecteur (L2) comporte(nt) par molécule au moins un groupe réactif vis-à-vis de l'agent de réticulation.

9. Composition de revêtement selon l'une quelconque des revendications 1 à 8, **caractérisée en ce que** le photoprotecteur (L1) est du type benzotriazole et/ou du type triazine.

10. Procédé pour la préparation des compositions de revêtement selon l'une quelconque des revendications 1 à 9, **caractérisée en ce qu'**elles sont préparées par mélange et éventuellement dispersion des composants individuels.

11. Utilisation des compositions de revêtement selon l'une quelconque des revendications 1 à 9, en tant que peinture de finition ou en tant que vernis.

12. Utilisation selon la revendication 11, pour le revêtement de matières plastiques.

13. Utilisation selon la revendication 11 ou 12, pour le revêtement de matières synthétiques ou d'alliages de matières synthétiques, thermoplastiques, colorés.
